(19) Europäisches Patentamt
European Patent Office
Office européen des brevets

(11) **EP 3 095 240 B1**

(12) **FASCICULE DE BREVET EUROPEEN**

(45) Date de publication et mention
de la délivrance du brevet:
**11.09.2019 Bulletin 2019/37**

(21) Numéro de dépôt: **15700568.7**

(22) Date de dépôt: **14.01.2015**

(51) Int Cl.:
*H04N 19/48* (2014.01)   *H04N 19/40* (2014.01)
*H04N 19/513* (2014.01)   *H04N 19/91* (2014.01)
*H04N 19/517* (2014.01)

(86) Numéro de dépôt international:
**PCT/EP2015/050584**

(87) Numéro de publication internationale:
**WO 2015/107077 (23.07.2015 Gazette 2015/29)**

(54) **PROCÉDÉ ET DISPOSITIF DE TRANSCODAGE DE DONNÉES VIDÉO DE H.264 VERS H.265**

VERFAHREN UND VORRICHTUNG ZUR TRANSCODIERUNG VON VIDEODATEN AUS H. 264 ZU H.265

METHOD AND DEVICE FOR TRANSCODING VIDEO DATA FROM H.264 TO H.265

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.01.2014 FR 1450367**

(43) Date de publication de la demande:
**23.11.2016 Bulletin 2016/47**

(73) Titulaire: **SAGEMCOM BROADBAND SAS**
**92500 Rueil Malmaison (FR)**

(72) Inventeur: **SAMY, Roger**
**F-92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A2- 2 579 596     US-A1- 2011 170 597**

- **DONG ZHANG ET AL: "Fast Transcoding from H.264 AVC to High Efficiency Video Coding", MULTIMEDIA AND EXPO (ICME), 2012 IEEE INTERNATIONAL CONFERENCE ON, IEEE, 9 juillet 2012 (2012-07-09), pages 651-656, XP032235754, DOI: 10.1109/ICME.2012.112 ISBN: 978-1-4673-1659-0**

- **PHILIPP HELLE ET AL: "Block Merging for Quadtree-Based Partitioning in HEVC", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 décembre 2012 (2012-12-01), pages 1720-1731, XP011487155, ISSN: 1051-8215, DOI: 10.1109/TCSVT.2012.2223051**

- **XING PEIYIN ET AL: "A coding unit classification based AVC-to-HEVC transcoding with background modeling for surveillance videos", 2013 VISUAL COMMUNICATIONS AND IMAGE PROCESSING (VCIP), IEEE, 17 novembre 2013 (2013-11-17), pages 1-6, XP032543648, DOI: 10.1109/VCIP.2013.6706393**

- **LIANG ZHAO ET AL: "Fast mode decision algorithm for intra prediction in HEVC", VISUAL COMMUNICATIONS AND IMAGE PROCESSING (VCIP), 2011 IEEE, IEEE, 6 novembre 2011 (2011-11-06), pages 1-4, XP032081373, DOI: 10.1109/VCIP.2011.6115979 ISBN: 978-1-4577-1321-7**

- **Wikipédia: "Combinaison (mathématiques) - Wikipédia", , 29 June 2013 (2013-06-29), XP055363761, Retrieved from the Internet: URL:https://web-beta.archive.org/web/20130 629120117/https://fr.wikipedia.org/wiki/Co mbinaison_%28math%C3%A9matiques%29 [retrieved on 2017-04-11]**

• DONG ZHANG ET AL: "Fast Transcoding from H.264 AVC to High Efficiency Video Coding", MULTIMEDIA AND EXPO (ICME), 2012 IEEE INTERNATIONAL CONFERENCE ON, IEEE, 9 July 2012 (2012-07-09), pages 651-656, XP032235754, DOI: 10.1109/ICME.2012.112 ISBN: 978-1-4673-1659-0

**Description**

La présente invention concerne un transcodage d'un flux de données vidéo au format H.264 en un flux de données vidéo au format H.265.

La norme de codage de données vidéo H.265, que l'on trouve aussi sous la référence HEVC (« High Efficiency Video Coding » en anglais) a été développée pour succéder à la norme de codage vidéo H.264, que l'on trouve aussi sous la référence MPEG-4 AVC (« Advanced Video Coding » en anglais) ou bien MPEG-4 Part 10. La norme de codage de données vidéo H.265 permet d'obtenir, à qualité équivalente, un meilleur taux de compression, ce qui permet de transporter des flux de données vidéos en très haute définition (2K1K, 4K2K, 8K4K...) sur des infrastructures de réseaux de communication existantes. Sous un autre angle de vue, la norme de codage de données vidéo H.265 permet de réduire significativement le débit nécessaire pour transporter des flux de données vidéo en haute définition ou en définition standard sur ces infrastructures de réseaux de communication existantes. Encore sous un autre angle de vue, la norme de codage de données vidéo H.265 permet de réduire la puissance nécessaire pour transporter des flux de données vidéo sur des infrastructures de réseaux de communication.

De nombreux équipements et infrastructures sont aujourd'hui adaptés pour supporter l'encodage de flux de données vidéo au format H.264, alors que les équipements conformes au format H.265 sont en phase d'émergence. De manière à bénéficier des avancées en termes de performance apportées par la norme H.265 par rapport à la norme H.264 sans avoir à renouveler l'ensemble desdits équipements et infrastructures, il est possible d'appliquer un mécanisme de transcodage d'un flux de données vidéo au format H.264 en un flux de données vidéo au format H.265. Cependant, décoder complètement le flux de données vidéo au format H.264 pour le ré-encoder complètement en un flux de données vidéo au format H.265 est coûteux en termes de ressources de traitement et en termes de latence de traitement.

Le document « Fast transcoding from H.264/AVC to High Efficiency Video Codyng », Dong Zhang et al, 2012, IEEE International Conference on Multimedia and Expo, pp. 651-656, décrit une méthode de transcodage rapide depuis un flux au format H.264/AVC vers un flux au format H.265/HEVC par fusion de macro-blocs issus du flux. H.264. sans avoir à décoder les données vidéo elles-mêmes, mais en mettant en compétition les vecteurs de mouvements des macro-blocs à fusionner et en sélectionnant celui qui entraîne le meilleur coût débit-distorsion.

Il est souhaitable de pallier ces inconvénients de l'état de la technique. Il est notamment souhaitable de fournir une solution qui permette de réduire la quantité de ressources de traitement nécessaire pour transcoder un flux de données vidéo au format H.264 en un flux de données vidéo au format H.265. Il est aussi souhaitable de fournir une solution qui permette de réduire la latence de traitement nécessaire pour effectuer un tel transcodage.

L'invention concerne un procédé de transcodage d'un flux de données vidéo au format H.264 en un flux de données vidéo au format H.265, ledit procédé étant mis en oeuvre par un dispositif de transcodage. Le procédé est tel qu'il comporte les étapes suivantes : effectuer une fusion de macro-blocs adjacents du flux de données au format H.264 selon un critère prédéterminé de similarité fréquentielle des coefficients de transformée en cosinus discrète DCT desdits macro-blocs après application d'une opération de quantification inverse ; et déterminer des vecteurs de mouvement au format H.265 sur la base de vecteurs de mouvement au format H.264 en effectuant, pour les macro-blocs résultant de la fusion de macro-blocs issus du flux de données au format H.264, une combinaison des vecteurs de mouvements desdits macro-blocs issus du flux de données au format H.264. Etant donné que le flux H.264 ne subit pas de décodage complet, le transcodage vers un flux de données au format H.265 est avantageux en termes de ressources de traitement et en termes de latence de traitement.

Selon un mode de réalisation particulier, lorsque les macro-blocs fusionnés correspondent à des données prédites en mode *intra,* le dispositif de transcodage associe au macro-bloc résultant une direction de prédiction qui est la direction de prédiction la plus proche selon le format H.264 d'une combinaison linéaire des directions de prédiction associées aux macro-blocs fusionnés.

Selon un mode de réalisation particulier, pour déterminer si des macro-blocs adjacents peuvent être fusionnés, le dispositif de transcodage obtient une information de somme des différences absolues entre coefficients DCT, après quantification inverse, desdits macro-blocs adjacents, et compare ladite information de somme des différences absolues avec un premier seuil prédéfini.

Selon un mode de réalisation particulier, pour fusionner quatre macro-blocs adjacents pour former un macro-bloc carré résultant, le dispositif de transcodage met en oeuvre : un premier diagramme papillon selon la dimension verticale des macro-blocs permettant ainsi de générer un premier macro-bloc intermédiaire à partir de deux macro-blocs parmi les quatre macro-blocs adjacents ; un second diagramme papillon selon la dimension verticale des macro-blocs permettant ainsi de générer un second macro-bloc intermédiaire à partir de deux autres macro-blocs parmi les quatre macro-blocs adjacents ; et un troisième diagramme papillon selon la dimension horizontale des macro-blocs permettant ainsi de générer le macro-bloc carré résultant.

Selon un mode de réalisation particulier, pour des macro-blocs encodés en mode *inter* à fusionner, le dispositif de transcodage détermine un écart entre des vecteurs de mouvement associés auxdits macro-blocs, et autorise ou pas la fusion desdits macro-blocs en fonction d'un critère de similarité desdits vecteurs de mouvement.

Selon un mode de réalisation particulier, pour déterminer si des vecteurs de mouvement sont similaires, le dispositif de transcodage détermine la norme de la différence des composantes desdits vecteurs de mouvement et compare ladite norme avec un second seuil prédéfini.

Selon un mode de réalisation particulier, le dispositif de transcodage détermine chaque vecteur de mouvement MV au format H.265 résultant d'une fusion de macro-blocs encodés en mode *inter* par la relation suivante :

$$MV = \frac{(\alpha1.MV1 + \alpha2.MV2+..\alpha n.MVn)}{(\alpha1 + \alpha2...+ \alpha n)}$$

où :

- n désigne la quantité de macro-blocs fusionnés ;
- MV1,..., MVn représente les n vecteurs de mouvements des macro-blocs encodés en mode *inter* qui ont été fusionnés ensemble ; et
- $\alpha1, ... , \alpha n$ sont des coefficients de pondération.

Selon un mode de réalisation particulier, le dispositif de transcodage fusionne plusieurs séquences d'images successives selon le format H.264 en une unique séquence d'images, lorsque dans lesdites séquences d'images successives, les énergies des images prédites sont inférieures à un troisième seuil prédéfini.

L'invention concerne également un dispositif de transcodage d'un flux de données vidéo au format H.264 en un flux de données vidéo au format H.265. Le dispositif de transcodage est tel qu'il comporte : des moyens pour effectuer une fusion de macro-blocs adjacents du flux de données au format H.264 selon un critère prédéterminé de similarité fréquentielle des coefficients de transformée en cosinus discrète DCT desdits macro-blocs après application d'une opération de quantification inverse ; et des moyens pour déterminer des vecteurs de mouvement au format H.265 sur la base de vecteurs de mouvement au format H.264 en effectuant, pour les macro-blocs résultant de la fusion de macro-blocs issus du flux de données au format H.264, une combinaison des vecteurs de mouvements desdits macro-blocs issus du flux de données au format H.264.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter l'un quelconque des procédés mentionnés ci-dessus, lorsque ledit programme est exécuté par le processeur. L'invention concerne également des moyens de stockage comprenant un tel programme d'ordinateur.

L'invention est définie par les revendications 1 à 10 ci-jointes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un premier exemple de dispositif de transcodage de données vidéo selon la présente invention ;
- la Fig. 2 illustre schématiquement un second exemple de dispositif de transcodage de données vidéo selon la présente invention ;
- la Fig. 3 illustre schématiquement un exemple d'architecture matérielle d'un dispositif de transcodage de données vidéo selon la présente invention ; et
- la Fig. 4 illustre schématiquement un algorithme de transcodage mis en oeuvre par un dispositif de transcodage de données vidéo selon la présente invention ; et
- la Fig. 5 illustre schématiquement un exemple de fusion de quatre macro-blocs d'un flux de données vidéo au format H.264 afin de former un macro-bloc d'un flux de données vidéo au format H.265.

Pour éviter de décoder complètement un flux de données au format H.264 pour le transcoder en un flux de données au format H.265, il est proposé, pour un codage intra-image, de fusionner des macro-blocs adjacents du flux de données au format H.264 selon un critère prédéterminé de similarité fréquentielle des coefficients de transformée en cosinus discrète DCT (« Discrète Cosine Transform » en anglais) desdits macro-blocs après application d'une opération de quantification inverse. Il est aussi proposé, pour un codage inter-image, de déterminer des vecteurs de mouvement au format H.265 sur la base des vecteurs de mouvement au format H.264 en effectuant, pour les macro-blocs résultant d'une fusion de macro-blocs issus du flux de données au format H.264, une combinaison des vecteurs de mouvements desdits macro-blocs issus du flux de données au format H.264. D'autres agencements avantageux apparaîtront à la lecture des modes de réalisation suivants.

Il est à noter que le terme *macro-bloc* utilisé dans le contexte du format H.264 correspond à l'expression *unité*

*de codage d'arbre CTU* (« Coding Tree Unit » en anglais) dans le contexte du format H.265.

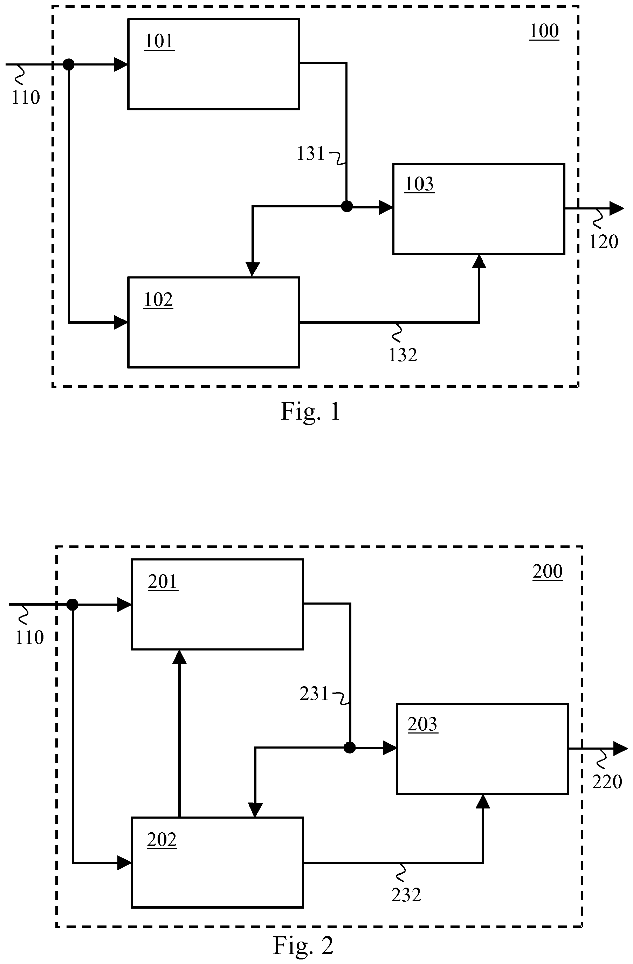

La Fig. 1 illustre schématiquement un premier exemple 100 de dispositif de transcodage de données vidéo selon la présente invention.

Le dispositif de transcodage 100 est adapté pour recevoir un flux de données vidéo 110 au format H.264.

Le dispositif de transcodage 100 comporte un module de fusion de macro-blocs 101 et ledit dispositif de transcodage 100 est adapté pour injecter le flux de données vidéo 110 dans ledit module de fusion de macro-blocs 101. Le format H.264 est basé sur un partitionnement par macro-blocs de taille 4x4 pixels et/ou 8x8 pixels et/ou $16 \times 16$ pixels. Le module de fusion de macro-blocs 101 est adapté pour fusionner des macro-blocs adjacents selon un critère prédéterminé de similarité fréquentielle des coefficients DCT desdits macro-blocs après application d'une opération de quantification inverse, de manière à former une structure de données appelée *quadtree.* Cette opération de fusion peut s'appliquer aussi bien pour les macro-blocs encodés en mode *intra* que pour les macro-blocs encodés en mode *inter.* Un *quadtree* est une structure de données représentative d'un partitionnement d'un espace à deux dimensions en divisant récursivement ledit espace en quatre quadrants.

Le dispositif de transcodage 100 comporte en outre un module d'analyse de vecteurs de mouvement 102 et ledit dispositif de transcodage 100 est adapté pour injecter dans ledit module d'analyse de vecteurs de mouvement 102 des métadonnées, présentes dans le flux de données vidéo 110 au format H.264. Le module d'analyse de vecteurs de mouvement 102 est adapté pour récupérer les vecteurs de mouvement présents dans ces métadonnées, et ainsi obtenir des informations de prédiction permettant d'obtenir des images prédites, appelées images P (prédiction unidirectionnelle « en avant » grâce à une image précédente dans le flux de données vidéo) et images B (prédiction bidirectionnelle grâce à une image précédente et à une image suivante dans le flux de données vidéo). Ces images P et B sont à distinguer des images I, aussi appelées images de référence, pour lesquelles les macro-blocs sont tous encodés en mode *intra*, éventuellement de manière prédite.

Le module d'analyse de vecteurs de mouvement 102 est en outre adapté pour obtenir les informations de fusion de macro-blocs 131 fournies par le module de fusion de macro-blocs 101 et pour déterminer des vecteurs de mouvement résultants associés aux macro-blocs fusionnés par le module de fusion de macro-blocs 101. Pour les macro-blocs fusionnés par le module de fusion de macro-blocs 101, les vecteurs de mouvement résultants sont une combinaison des vecteurs de mouvement associés à chacun des macro-blocs issus du flux de données vidéo 110 et qui ont été fusionnés.

Le module d'analyse de vecteurs de mouvement 102 est en outre adapté pour effectuer une remise à l'échelle des vecteurs de mouvement au format H.264 pour les transposer au format H.265. En effet, la précision sub-pixélique selon le format H.264 diffère de la précision sub-pixélique au format H.265, ce qui implique une remise à l'échelle dans le cadre du transcodage. Les vecteurs de mouvement ainsi convertis sont alors des informations de mouvement 132 permettant, dans le cadre du transcodage au format H.265, de générer des images P et/ou B (codage inter-image). Par ailleurs, les images P et B sont constituées de résidus, car les images P et B sont prédites à partir d'images I (et éventuellement d'images P et/ou B) et des vecteurs de mouvement associés aux macro-blocs.

Le dispositif de transcodage 100 comporte en outre un module d'encodage 103 adapté pour générer un flux de données vidéo 120 au format H.265, à partir des informations de fusion de macro-blocs 131 fournies par le module de fusion de macro-blocs 101 et à partir des informations de mouvement 132 fournies par le module d'analyse de vecteurs de mouvement 102.

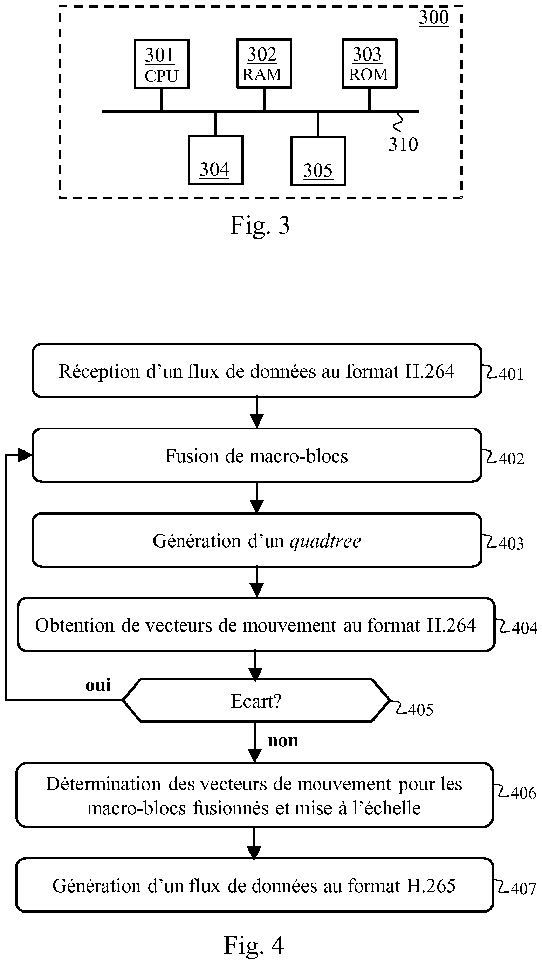

Le comportement du dispositif de transcodage 100 est détaillé par la suite en relation avec la Fig. 4.

La Fig. 2 illustre schématiquement un second exemple 200 de dispositif de transcodage de données vidéo selon la présente invention. Le dispositif de transcodage 200 a de nombreuses similitudes avec le dispositif de transcodage 100 déjà présenté en relation avec la Fig. 1.

Le dispositif de transcodage 200 est adapté pour recevoir le flux de données vidéo 110 au format H.264.

Le dispositif de transcodage 200 comporte un module de fusion de macro-blocs 201 et ledit dispositif de transcodage 200 est adapté pour injecter le flux de données vidéo 110 dans ledit module de fusion de macro-blocs 201. Le module de fusion de macro-blocs 201 est adapté pour fusionner des macro-blocs adjacents selon un critère prédéterminé de similarité fréquentielle des coefficients DCT desdits macro-blocs après application d'une opération de quantification inverse, de manière à former une structure de données de type *quadtree.* Ce *quadtree* correspond à des informations de fusion de macro-blocs 231 permettant, dans le cadre du transcodage au format H.265, de générer des images I (codage intra-image).

Le dispositif de transcodage 200 comporte en outre un module d'analyse de vecteurs de mouvement 202 et ledit dispositif de transcodage 200 est adapté pour injecter dans ledit module d'analyse de vecteurs de mouvement 202 des métadonnées présentes dans le flux de données vidéo 110 au format H.264. Le module d'analyse de vecteurs de mouvement 202 est adapté pour récupérer les vecteurs de mouvement présents dans ces métadonnées. Le module d'analyse de vecteurs de mouvement 202 est en outre adapté pour obtenir les informations de fusion de macro-blocs 231 fournies par le module de fusion de macro-blocs 201 et pour déterminer des vecteurs de mouvement résultants associés aux macro-blocs fusionnés par le module de fusion de macro-blocs 201. Pour les macro-blocs fusionnés par le module de fusion de macro-blocs 201, les vecteurs de mouvement résultants sont une combinaison des vecteurs de mouvement associés à chacun des macro-blocs issus du flux de données vidéo 110 et qui ont été fusionnés.

Le module d'analyse de vecteurs de mouvement 202 est en outre adapté pour effectuer la remise à l'échelle des vecteurs de mouvement au format H.264 pour les transposer au format H.265. Les vecteurs de mouvement ainsi convertis correspondent à des informations de mouvement 232 permettant, dans le cadre du transcodage au format H.265, de générer des images P et/ou B (codage inter-image).

Le module d'analyse de vecteurs de mouvement 202 est en outre adapté pour fournir au module de fusion de macro-blocs 201 un retour 233 d'analyse des vecteurs de mouvement, afin de permettre au module de fusion de macro-blocs 201 d'affiner la fusion de macro-blocs.

Le dispositif de transcodage 200 comporte en outre un module d'encodage 203 adapté pour générer un flux de données vidéo 220 au format H.265, à partir des informations de fusion de macro-blocs 231 fournies par le module de fusion de macro-blocs 201 et à partir des informations de mouvement 232 fournies par le module d'analyse de vecteurs de mouvement 202.

Le comportement du dispositif de transcodage 200 est détaillé par la suite en relation avec la Fig. 4.

La Fig. 3 illustre schématiquement un exemple d'architecture matérielle d'un dispositif de transcodage 300 de données vidéo selon la présente invention. Le dispositif de transcodage 300 comporte alors, reliés par un bus de communication 310 : un processeur ou CPU (« Central Processing Unit» en anglais) 301 ; une mémoire vive RAM (« Random Access Memory » en anglais) 302 ; une mémoire morte ROM (« Read Only Memory » en anglais) 303 ; une unité de stockage 304 ou un lecteur de support de stockage, tel qu'un lecteur de cartes SD (« Secure Digital » en anglais) ou un disque dur HDD (« Hard Disk Drive » en anglais) ; et un ensemble d'interfaces 305 permettant de recevoir un flux de données vidéo au format H.264 et de fournir un flux de données transcodées au format H.265, par exemple par le biais d'un réseau de communication.

Le processeur 301 est capable d'exécuter des instructions chargées dans la RAM 302 à partir de la ROM 303, d'une mémoire externe (non représentée), d'un support de stockage, ou d'un réseau de communication (non représenté). Lorsque le dispositif de transcodage 300 est mis sous tension, le processeur 301 est capable de lire de la RAM 302 des instructions et de les exécuter. Ces instructions forment un programme d'ordinateur causant la mise en oeuvre, par le processeur 301, de tout ou partie des algorithmes et étapes décrits ci-après.

Tout ou partie des algorithmes et étapes décrits ci-après peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). Chaque module représenté au sein des Figs. 1 et 2 peut ainsi correspondre à une mise en oeuvre logicielle ou à une mise en oeuvre matérielle. Cela signifie que seule une partie desdits modules peut être mise en oeuvre sous forme logicielle alors que le reste desdits modules peut être mis en oeuvre sous forme matérielle.

La Fig. 4 illustre schématiquement un algorithme de transcodage mis en oeuvre par un dispositif de transcodage de données vidéo selon la présente invention. Considérons que l'algorithme de la Fig. 6 est mis en oeuvre par le dispositif de transcodage 500.

Dans une étape 401, le dispositif de transcodage 500 reçoit le flux de données vidéo 110 au format H.264.

Dans une étape 402 suivante, le dispositif de transcodage 500 effectue une fusion de macro-blocs adjacents d'images de référence I issues du flux de données vidéo 110, selon un critère prédéterminé de similarité fréquentielle des coefficients DCT desdits macro-blocs après application d'une opération de quantification inverse. Le dispositif de transcodage 500 n'effectue ainsi pas de décodage complet du flux de données vidéo 110 au format H.264 pour effectuer le transcodage vers le format H.265.

Pour ce faire, le dispositif de transcodage 500 sélectionne une image de référence (image I) d'une séquence d'images GOP (« Group of Pictures » en anglais), en considérant que le flux de données vidéo 110 au format H.264 est décomposé en GOP. Le dispositif de transcodage 500 peut réutiliser la définition des séquences d'images GOP définies dans le cadre du flux de données vidéo 110 au format H.264.

Dans un mode de réalisation particulier, le dispositif de transcodage 500 fusionne plusieurs séquences successives d'images GOP telles que définies dans le cadre du flux de données vidéo 110 au format H.264. Le GOP résultant comporte ainsi *a priori* plusieurs images I de référence. Le dispositif de transcodage 500 remplace alors au moins une image I de ce GOP résultant par une image P ou une image B, de sorte qu'il ne subsiste plus qu'une image I de référence dans ledit GOP. Le remplacement d'une image I de référence par une image P ou une image B s'effectue par mise en oeuvre d'opérations de prédiction correspondantes, afin d'assurer la cohérence des données (vidéo et métadonnées) du GOP.

Plus particulièrement, le dispositif de transcodage 500 fusionne plusieurs GOPs issus du flux de données vidéo 110 au format H.264 lorsque les images I de référence de ces GOP sont proches. Cet aspect peut être déterminé par le dispositif de transcodage 500 par comparaison des énergies des images B et P. Lorsque les énergies des images B et P sont inférieures à un troisième seuil prédéfini T, le dispositif de transcodage 500 fusionne les concernés GOPs ;

sinon, le dispositif de transcodage 500 conserve la définition des GOPs utilisée dans le flux de données vidéo 110 au format H.264. Cette fusion de GOPs permet d'obtenir un GOP résultant de plus grande taille qu'à l'origine, ce qui permet de réduire le débit du flux de données vidéo au format H.265, notamment en présence d'images fixes. Le troisième seuil prédéfini T est par exemple défini suite à une phase d'apprentissage ou à des tests en laboratoire.

Le dispositif de transcodage 500 détermine, pour chaque macro-bloc de chaque image du GOP, une information de similarité fréquentielle avec chaque macro-bloc adjacent audit macro-bloc.

Selon un mode de réalisation particulier, l'information de similarité fréquentielle $S$ d'un macro-bloc centré en $(i,j)$ par rapport à un macro-bloc centré en $(k, l)$ est déterminée grâce à un algorithme de somme des différences absolues SAD (« Sum of Absolute Différences » en anglais) appliqué aux coefficients DCT après quantification inverse. L'information de similarité fréquentielle $S$ est alors le résultat de l'algorithme SAD appliqué aux coefficients DCT après quantification inverse.

Le dispositif de transcodage 500 compare alors l'information de similarité fréquentielle $S$ ainsi déterminée avec un premier seuil prédéfini $S_0$. Ledit premier seuil prédéfini $S_0$ est par exemple défini suite à une phase d'apprentissage ou à des tests en laboratoire.

Si l'information de similarité fréquentielle $S$ est inférieure audit premier seuil prédéfini $S_0$, alors le dispositif de transcodage 500 considère que les macro-blocs concernés peuvent être fusionnés ; sinon, le dispositif de transcodage 500 considère que les macro-blocs concernés ne présentent pas assez de similitudes pour être fusionnés. Le dispositif de transcodage 500 réitère l'opération pour chaque couple de macro-blocs adjacents. Les fusions effectivement opérées doivent respecter les tailles autorisées des unités CTUs, telles que définies par le format H.265.

La fusion de macro-blocs peut être réalisée en mettant en oeuvre un ensemble de trois diagrammes papillons (« butterfly diagram » en anglais). Cette approche permet de fusionner des macro-blocs carrés (*e.g.* de taille 4x4 ou 8x8) en des macro-blocs carrés de taille supérieure (e.g. de taille 16x16 ou 32x32).

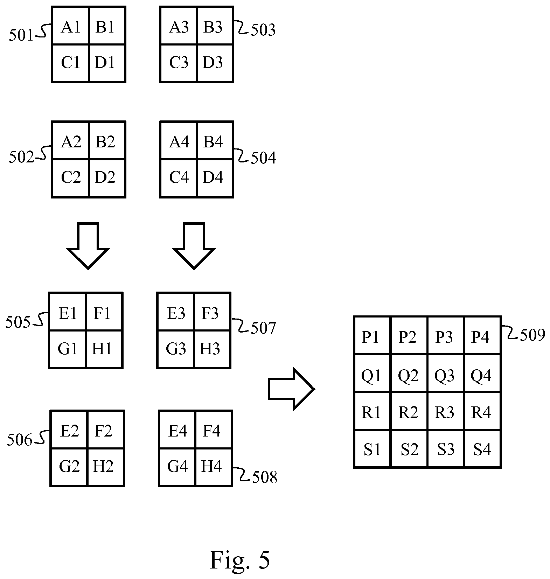

La Fig. 5 illustre schématiquement un exemple de fusion de quatre macro-blocs adjacents 501, 502, 503, 504 du flux de données vidéo au format H.264 afin de former un macro-bloc 509 du flux de données vidéo au format H.265. Les macro-blocs 501, 502, 503, 504 sont positionnés spatialement comme représenté sur la Fig. 5. Les macro-blocs 501, 502, 503, 504 sont de manière illustrative de taille 2x2 (bien que cette taille ne soit pas compatible avec le format H.264, cela permet une illustration simple du mécanisme de fusion). La fusion de ces macro-blocs 501, 502, 503, 504 mène donc à un macro-bloc de taille 8x8.

Considérons que le macro-bloc 501 comporte un ensemble de coefficients DCT après quantification inverse référencés A1, B1, C1, D1, comme représenté sur la Fig. 5. Considérons aussi que le macro-bloc 802 comporte un ensemble de coefficients DCT après quantification inverse référencés A2, B2, C2, D2, comme représenté sur la Fig. 5. Considérons aussi que le macro-bloc 503 comporte un ensemble de coefficients DCT après quantification inverse référencés A3, B3, C3, D3, comme représenté sur la Fig. 5. Considérons aussi que le macro-bloc 504 comporte un ensemble de coefficients DCT après quantification inverse référencés A4, B4, C4, D4, comme représenté sur la Fig. 5.

Un premier diagramme papillon permet d'effectuer une première fusion selon la dimension verticale des macro-blocs 501 et 502. Un second diagramme papillon permet d'effectuer une seconde fusion selon la dimension verticale des macro-blocs 503 et 504. On obtient ainsi quatre macro-blocs intermédiaires 505, 506, 507 et 508. Considérons que le macro-bloc 505 est constitué d'un ensemble de coefficients DCT fusionnés référencés E1, F1, G1, H1, comme représenté sur la Fig. 5. Considérons aussi que le macro-bloc 506 est constitué d'un ensemble de coefficients DCT fusionnés référencés E2, F2, G2, H2, comme représenté sur la Fig. 5. Considérons aussi que le macro-bloc 507 est constitué d'un ensemble de coefficients DCT fusionnés référencés E3, F3, G3, H3, comme représenté sur la Fig. 5. Considérons aussi que le macro-bloc 508 est constitué d'un ensemble de coefficients DCT fusionnés référencés E4, F4, G4, H4, comme représenté sur la Fig. 5. La fusion des macro-blocs 501, 502, 503 et 504 est alors telle que :

$$E1 = A1 + A2 \quad E2 = A1 - A2 \quad E3 = A3 + A4 \quad E4 = A3 - A4$$
$$F1 = B1 + B2 \quad F2 = B1 - B2 \quad F3 = B3 + B4 \quad F4 = B3 - B4$$
$$G1 = C1 + C2 \quad G2 = C1 - C2 \quad G3 = C3 + C4 \quad G4 = C3 - C4$$
$$H1 = D1 + D2 \quad H2 = D1 - D2 \quad H3 = D3 + D4 \quad H4 = D3 - D4$$

Un troisième diagramme papillon permet d'effectuer une troisième fusion, selon la dimension horizontale, des macro-blocs intermédiaires 505, 506, 507 et 508 afin d'obtenir le macro-bloc 509. Considérons que le macro-bloc 509 est constitué d'un ensemble de coefficients DCT fusionnés référencés P1, P2, P3, P4, Q1, Q2, Q3, Q4, R1, R2, R3, R4, S1, S2, S3, S4 comme représenté sur la Fig. 5. La fusion des macro-blocs intermédiaires 505, 506, 507 et 508 est alors telle que :

$$P1 = E1 + E3 \quad P2 = F1 + F3 \quad P3 = E1 - E3 \quad P4 = F1 - F3$$
$$Q1 = G1 + G3 \quad Q2 = H1 + H3 \quad Q3 = G1 - G3 \quad Q4 = H1 - H3$$

(suite)

R1 = E2 + E4    R2 = F2 + F4    R3 = E2 - E4    R4 = F2 - F4
S1 = G2 + G4    S2 = H2 + H4    S3 = G2 - G4    S4 = H2 - H4

De retour à la Fig. 4, le dispositif de transcodage 500 effectue alors une opération de quantification des macro-blocs DCT, après exécution de l'opération de fusion, en utilisant un pas de quantification inférieur ou égal au pas de quantification qui avait été utilisé pour générer le flux de données au format H.264. Une information de pas de quantification est fournie dans les métadonnées incluses dans le flux de données au format H.264.

Selon un mode de réalisation particulier, le dispositif de transcodage 500 n'effectue pas de fusion de macro-blocs, lorsqu'au moins un de ces macro-blocs est encodé en mode *intra* alors que le reste des macro-blocs considérés est encodé en mode *inter.* En effet, des images P et B peuvent contenir un ou plusieurs macro-blocs encodés en mode *intra.*

Lorsque les macro-blocs fusionnés correspondent à des données prédites en mode *intra*, le dispositif de transcodage 500 associe au macro-bloc résultant une direction de prédiction qui est la direction de prédiction la plus proche selon le format H.264 d'une combinaison linéaire des directions de prédiction associées aux macro-blocs fusionnés.

Dans une étape 403 suivante, le dispositif de transcodage 500 génère une structure de données de type *quadtree* à partir des macro-blocs obtenus après l'opération de fusion et de quantification de l'étape 402.

Ensuite, dans une étape 404, le dispositif de transcodage 500 obtient des vecteurs de mouvement à partir du flux de données vidéo 110.

Dans une étape 405 suivante, le dispositif de transcodage 500 évalue l'écart entre les vecteurs de mouvement associés aux macro-blocs issus du flux de données vidéo 110 et qui ont été fusionnés ensemble. Le dispositif de transcodage 500 cherche à déterminer une information de similarité de mouvement entre lesdits vecteurs de mouvement. Pour ce faire, le dispositif de transcodage 500 peut déterminer la norme de la différence des composantes desdits vecteurs de mouvement. Chaque composante d'un premier vecteur de mouvement est soustraite à la composante correspondante d'un second vecteur de mouvement, et la norme résultante est calculée. Cette norme est alors comparée avec un second seuil prédéfini $S_1$. Ledit second seuil prédéfini $S_1$ est par exemple défini suite à une phase d'apprentissage ou à des tests en laboratoire. Si l'information de similarité de mouvement est inférieure audit second seuil prédéfini $S_1$, alors le dispositif de transcodage 500 considère que les macro-blocs concernés peuvent effectivement être fusionnés ; sinon, le dispositif de transcodage 500 considère que les macro-blocs concernés ne présentent pas assez de similitudes pour être fusionnés. Si toutes les opérations de fusion sont confirmées, alors une étape 406 est effectuée ; sinon, l'étape 402 est réitérée en interdisant la ou les fusions infirmées par l'étape 405.

Lorsque l'algorithme de la Fig. 4 est représentatif du comportement du dispositif de transcodage 100 déjà décrit en relation avec la Fig. 1, l'étape 405 est omise et l'algorithme passe directement de l'étape 404 à l'étape 406. La fusion de macro-blocs effectuée par le module de fusion de macro-blocs 101 est alors conservée. Lorsque l'algorithme de la Fig. 4 est représentatif du comportement du dispositif de transcodage 200 déjà décrit en relation avec la Fig. 2, l'étape 405 est exécutée, ce qui permet au module d'analyse de vecteurs de mouvement 202 de remettre en cause la fusion de macro-blocs proposée par le module de fusion de macro-blocs 201.

Dans l'étape 406, pour chacun des macro-blocs encodés en mode *inter* résultant d'une fusion de macro-blocs, le dispositif de transcodage 500 détermine une combinaison des vecteurs de mouvement associés à chacun des macro-blocs issus du flux de données vidéo 110 et qui ont été fusionnés.

Selon un premier exemple, une telle combinaison est la médiane des vecteurs de mouvement desdits macro-blocs issus du flux de données vidéo 110 et qui ont été fusionnés. Pour les macro-blocs qui n'ont pas fait l'objet d'une fusion, le dispositif de transcodage 500 prend le vecteur de mouvement tel que présent dans le flux de données vidéo 110 au format H.264.

Selon un second exemple, une telle combinaison est définie par la relation suivante :

$$MV = \frac{(\alpha 1. \, MV1 + \, \alpha 2. \, MV2 + .. \, \alpha n. \, MVn)}{(\, \alpha 1 + \, \alpha 2 \ldots + \, \alpha n)}$$

où :

- MV désigne le vecteur de mouvement lissé,
- n désigne la quantité de macro-blocs fusionnés ;
- MV1,..., MVn représente les n vecteurs de mouvements des macro-blocs encodés en mode *inter* qui ont été fusionnés ensemble à l'étape 402 ; et
- $\alpha 1, \ldots , \alpha n$ sont des coefficients de pondération.

Les coefficients de pondération α1, ..., an sont par exemple définis suite à une phase d'apprentissage ou à des tests en laboratoire.

Le dispositif de transcodage 500 assure préférentiellement que les coefficients de pondération α1, ... , an sont tels qu'un coefficient de pondération associé à un vecteur de mouvement pointant sur une image I est plus élevé qu'un coefficient de pondération associé à un vecteur de mouvement pointant sur une image P ou B.

Dans le cas d'images B, pour un macro-bloc considéré, la prédiction peut être « en avant » (« forward » en anglais) ou « en arrière » (« backward » en anglais). Les vecteurs de mouvement ont des référentiels selon des directions opposées. Le dispositif de transcodage 500 inverse alors tout vecteur de mouvement défini selon une prédiction en arrière, avant d'effectuer la combinaison de vecteurs de mouvement de l'étape 406.

Ensuite, le dispositif de transcodage 500 effectue la remise à l'échelle des vecteurs de mouvement au format H.264 pour les transposer au format H.265.

Dans une étape 407 suivante, le dispositif de transcodage 500 génère un flux de données au format H.265 sur la base du *quadtree* généré à l'étape 403 et des vecteurs de mouvement remis à l'échelle à l'étape 406.

## Revendications

1. Procédé de transcodage d'un flux (110) de données vidéo au format H.264 en un flux (120 ; 220) de données vidéo au format H.265, ledit procédé étant mis en oeuvre dans le domaine fréquentielle sans passage dans le domaine pixel par un dispositif de transcodage (100 ; 200 ; 500), ledit procédé comportant les étapes suivantes :

   - effectuer (402) une fusion de macro-blocs adjacents du flux de données au format H.264 selon un critère prédéterminé de similarité fréquentielle des coefficients de transformée en cosinus discrète DCT desdits macro-blocs après application d'une opération de quantification inverse ; et
   - déterminer (406) des vecteurs de mouvement au format H.265 sur la base de vecteurs de mouvement au format H.264 en effectuant, pour les macro-blocs résultant de la fusion de macro-blocs issus du flux de données au format H.264, une combinaison des vecteurs de mouvements desdits macro-blocs issus du flux de données au format H.264 ; **caractérisé en ce que** :
   pour déterminer si des macro-blocs adjacents peuvent être fusionnés, le dispositif de transcodage obtient une information de somme des différences absolues entre coefficients DCT, après quantification inverse, desdits macro-blocs adjacents, et compare ladite information de somme des différences absolues avec un premier seuil prédéfini.

2. Procédé de transcodage selon la revendication 1, **caractérisé en ce que**, lorsque les macro-blocs fusionnés correspondent à des données prédites en mode *intra*, le dispositif de transcodage associe au *macro-bloc* résultant une direction de prédiction qui est la direction de prédiction la plus proche selon le format H.264 d'une combinaison linéaire des directions de prédiction associées aux macro-blocs fusionnés.

3. Procédé de transcodage selon l'une quelconque des revendications 1 à 2, **caractérisé en ce que**, pour fusionner quatre macro-blocs adjacents (501, 502, 503, 504) pour former un *macro-bloc* carré résultant (509), le dispositif de transcodage met en oeuvre :

   - un premier diagramme papillon selon la dimension verticale des macro-blocs permettant ainsi de générer deux premiers macro-blocs intermédiaires (505, 506) à partir de deux macro-blocs (501, 502) parmi les quatre macro-blocs adjacents ;
   - un second diagramme papillon selon la dimension verticale des macro-blocs permettant ainsi de générer deux second macro-blocs intermédiaires (507, 508) à partir de deux autres macro-blocs (503, 504) parmi les quatre macro-blocs adjacents ; et
   - un troisième diagramme papillon selon la dimension horizontale des macro-blocs permettant ainsi de générer le *macro-bloc* carré résultant.

4. Procédé de transcodage selon l'une quelconque des revendications 1 à 3, **caractérisé en ce que**, pour des macro-blocs encodés en mode *inter* à fusionner, le dispositif de transcodage détermine (405) un écart entre des vecteurs de mouvement associés auxdits macro-blocs, et autorise ou pas la fusion desdits macro-blocs en fonction d'un critère de similarité desdits vecteurs de mouvement.

5. Procédé de transcodage selon la revendication 4, **caractérisé en ce que**, pour déterminer si des vecteurs de mouvement sont similaires, le dispositif de transcodage détermine la norme de la différence des composantes desdits vecteurs de mouvement et compare ladite norme avec un second seuil prédéfini.

6. Procédé de transcodage selon l'une quelconque des revendications 1 à 5, **caractérisé en ce que** le dispositif de transcodage détermine chaque vecteur de mouvement MV au format H.265 résultant d'une fusion de macro-blocs encodés en mode *inter* par la relation suivante :

$$MV = \frac{(\alpha 1. MV1 + \ \alpha 2. MV2 + .. \alpha n. MVn)}{(\ \alpha 1 + \ \alpha 2 ... + \ \alpha n)}$$

où :

- *n* désigne la quantité de macro-blocs fusionnés ;
- MV1,..., MVn représente les n vecteurs de mouvements des macro-blocs encodés en mode *inter* qui ont été fusionnés ensemble ; et
- $\alpha 1, ... , an$ sont des coefficients de pondération.

7. Procédé de transcodage selon l'une quelconque des revendications 1 à 6, **caractérisé en ce que** le dispositif de transcodage fusionne plusieurs séquences d'images successives selon le format H.264 en une unique séquence d'images, lorsque dans lesdites séquences d'images successives, les énergies des images prédites sont inférieures à un troisième seuil prédéfini.

8. Dispositif de transcodage (100 ; 200 ; 500) d'un flux (110) de données vidéo au format H.264 en un flux (120 ; 220) de données vidéo au format H.265, ledit dispositif de transcodage fonctionnant dans le domaine fréquentielle sans passer dans le domaine pixels et comportant :

- des moyens (101 ; 201) pour effectuer une fusion de macro-blocs adjacents du flux de données au format H.264 selon un critère prédéterminé de similarité fréquentielle des coefficients de transformée en cosinus discrète DCT desdits macro-blocs après application d'une opération de quantification inverse ; et
- des moyens (102 ; 202) pour déterminer des vecteurs de mouvement au format H.265 sur la base de vecteurs de mouvement au format H.264 en effectuant, pour les macro-blocs résultant de la fusion de macro-blocs issus du flux de données au format H.264, une combinaison des vecteurs de mouvements desdits macro-blocs issus du flux de données au format H.264 ; **caractérisé en ce que** :
pour déterminer si des macro-blocs adjacents peuvent être fusionnés, le dispositif de transcodage comprend des moyens pour obtenir une information de somme des différences absolues entre coefficients DCT, après quantification inverse, desdits macro-blocs adjacents, et des moyens de comparaison pour comparer ladite information de somme des différences absolues avec un premier seuil prédéfini.

9. Programme d'ordinateur, **caractérisé en ce qu'**il comprend des instructions pour mettre en oeuvre, par un dispositif, le procédé selon l'une quelconque des revendications 1 à 7 lorsque ledit programme est exécuté par un processeur dudit dispositif.

10. Moyens de stockage, **caractérisés en ce qu'**ils stockent un programme d'ordinateur comprenant des instructions pour mettre en oeuvre, par un dispositif, le procédé selon l'une quelconque des revendications 1 à 7 lorsque ledit programme est exécuté par un processeur dudit dispositif.


**Patentansprüche**

1. Verfahren zum Transcodieren eines Videodatenstroms (110) im Format H.264 in einen Videodatenstrom (120; 220) im Format H.265, wobei das Verfahren im Frequenzbereich ohne Übergang in den Pixelbereich von einer Transcodiervorrichtung (100; 200; 500) durchgeführt wird, wobei das Verfahren die folgenden Schritte aufweist:

- Ausführen (402) einer Fusion benachbarter Makroblöcke des Datenstroms im Format H.264 gemäß einem vorbestimmten Kriterium der Frequenzähnlichkeit der Koeffizienten einer diskreten Cosinus-Transformation DCT der Makroblöcke nach Anwendung einer inversen Quantisierungsoperation; und
- Bestimmen (406) von Bewegungsvektoren im Format H.265 auf der Basis von Bewegungsvektoren im Format H.264, indem für die aus der Fusion von vom Datenstrom im Format H.264 stammenden Makroblöcken resultierenden Makroblöcke eine Kombination der Bewegungsvektoren der vom Datenstrom im Format H.264 stammenden Makroblöcke ausgeführt wird;

**dadurch gekennzeichnet, dass**:

um zu bestimmen, ob benachbarte Makroblöcke fusioniert werden können, die Transcodiervorrichtung eine Summeninformation der Absolutdifferenzen zwischen DCT-Koeffizienten nach inverser Quantisierung der benachbarten Makroblöcke erhält, und die Summeninformation der Absolutdifferenzen mit einer ersten vordefinierten Schwelle vergleicht.

2. Transcodierverfahren nach Anspruch 1, **dadurch gekennzeichnet, dass**, wenn die fusionierten Makroblöcke im Intra-Modus prädizierten Daten entsprechen, die Transcodiervorrichtung dem resultierenden Makroblock eine Prädiktionsrichtung zuordnet, die die nächstliegende Prädiktionsrichtung gemäß dem Format H.264 einer linearen Kombination der den fusionierten Makroblöcken zugeordneten Prädiktionsrichtungen ist.

3. Transcodierverfahren nach einem der Ansprüche 1 bis 2, **dadurch gekennzeichnet, dass** zum Fusionieren von vier benachbarten Makroblöcken (501, 502, 503, 504), um einen resultierenden quadratischen Makroblock (509) zu bilden, die Transcodiervorrichtung anwendet:

- ein erstes Schmetterlingsdiagramm gemäß der senkrechten Abmessung der Makroblöcke, was es so ermöglicht, zwei erste Zwischen-Makroblöcke (505, 506) ausgehend von zwei Makroblöcken (501, 502) unter den vier benachbarten Makroblöcken zu generieren;
- ein zweites Schmetterlingsdiagramm gemäß der senkrechten Abmessung der Makroblöcke, was es so ermöglicht, zwei zweite Zwischen-Makroblöcke (507, 508) ausgehend von zwei anderen Makroblöcken (503, 504) unter den vier benachbarten Makroblöcken zu generieren; und
- ein drittes Schmetterlingsdiagramm gemäß der waagrechten Abmessung der Makroblöcke, was es so ermöglicht, den resultierenden quadratischen Makroblock zu generieren.

4. Transcodierverfahren nach einem der Ansprüche 1 bis 3, **dadurch gekennzeichnet, dass** für zu fusionierende, im Inter-Modus codierte Makroblöcke die Transcodiervorrichtung (405) eine Abweichung zwischen den Makroblöcken zugeordneten Bewegungsvektoren bestimmt (405) und die Fusion der Makroblöcke abhängig von einem Ähnlichkeitskriterium der Bewegungsvektoren erlaubt oder nicht.

5. Transcodierverfahren nach Anspruch 4, **dadurch gekennzeichnet, dass** zur Bestimmung, ob Bewegungsvektoren ähnlich sind, die Transcodiervorrichtung die Norm der Differenz der Komponenten der Bewegungsvektoren bestimmt und die Norm mit einer zweiten vordefinierten Schwelle vergleicht.

6. Transcodierverfahren nach einem der Ansprüche 1 bis 5, **dadurch gekennzeichnet, dass** die Transcodiervorrichtung jeden Bewegungsvektor MV im Format H.265, der aus einer Fusion von im Inter-Modus codierten Makroblöcken resultiert, durch die folgende Beziehung bestimmt:

$$MV = \frac{(\alpha1.MV1 + \alpha2.MV2 + ..\alpha n.MVn)}{(\alpha1 + \alpha2 ... + \alpha n)}$$

wobei:

- n die Menge von fusionierten Makroblöcken bezeichnet;
- MV1, ..., MVn die n Bewegungsvektoren der im Inter-Modus codierten Makroblöcke darstellt, die miteinander fusioniert wurden; und
- $\alpha1$, ..., $\alpha n$ Gewichtungskoeffizienten sind.

7. Transcodierverfahren nach einem der Ansprüche 1 bis 6, **dadurch gekennzeichnet, dass** die Transcodiervorrichtung mehrere aufeinanderfolgende Bildsequenzen gemäß dem Format H.264 in eine einzige Bildsequenz fusioniert, wenn in den aufeinanderfolgenden Bildsequenzen die Energien der prädizierten Bilder unter einer dritten vordefinierten Schwelle liegen.

8. Vorrichtung (100; 200; 500) zur Transcodierung eines Videodatenstroms (110) im Format H.264 in einen Videodatenstrom (120; 220) im Format H.265, wobei die Transcodiervorrichtung im Frequenzbereich arbeitet, ohne in den Pixelbereich überzugehen, und aufweist:

- Einrichtungen (101; 201) zur Ausführung einer Fusion von benachbarten Makroblöcken des Datenstroms im Format H.264 gemäß einem vorbestimmten Kriterium der Frequenzähnlichkeit der Koeffizienten einer diskreten Cosinus-Transformation DCT der Makroblöcke nach Anwendung einer inversen Quantisierungsoperation; und
- Einrichtungen (102; 202) zur Bestimmung von Bewegungsvektoren im Format H.265 auf der Basis von Bewegungsvektoren im Format H.264, indem für die aus der Fusion von vom Datenstrom im Format H.264 stammenden Makroblöcken resultierenden Makroblöcke eine Kombination der Bewegungsvektoren der vom Datenstrom im Format H.264 stammenden Makroblöcke ausgeführt wird;

**dadurch gekennzeichnet, dass**:

zur Bestimmung, ob benachbarte Makroblöcke fusioniert werden können, die Transcodiervorrichtung Einrichtungen zum Erhalt einer Summeninformation der Absolutdifferenzen zwischen DCT-Koeffizienten nach inverser Quantisierung der benachbarten Makroblöcke und Einrichtungen zum Vergleich der Summeninformation der Absolutdifferenzen mit einer ersten vordefinierten Schwelle enthält.

9. Computerprogramm, **dadurch gekennzeichnet, dass** es Anweisungen zur Durchführung, durch eine Vorrichtung, des Verfahrens nach einem der Ansprüche 1 bis 7 enthält, wenn das Programm von einem Prozessor der Vorrichtung ausgeführt wird.

10. Speichereinrichtungen, **dadurch gekennzeichnet, dass** sie ein Computerprogramm speichern, das Anweisungen zur Durchführung, durch eine Vorrichtung, des Verfahrens nach einem der Ansprüche 1 bis 7 enthält, wenn das Programm von einem Prozessor der Vorrichtung ausgeführt wird.

**Claims**

1. Method for transcoding a stream (110) of video data in the H.264 format into a stream (120; 220) of video data in the H.265 format, the said method being implemented in the frequency domain without passing to the pixel domain by a transcoding device (100; 200; 500), the said method comprising the following steps:

- performing (402) a fusion of adjacent macro-blocks of the data stream in the H.264 format according to a predetermined criterion of frequency similarity of the discrete cosine transform DCT coefficients of the said macro-blocks after application of an inverse quantization operation; and
- determining (406) motion vectors in the H.265 format on the basis of motion vectors in the H.264 format by performing, for the macro-blocks resulting from the fusion of macro-blocks arising from the data stream in the H.264 format, a combination of the motion vectors of the said macro-blocks arising from the data stream in the H.264 format; **characterized in that**:

to determine whether adjacent macro-blocks can be fused, the transcoding device obtains an information of sum of absolute differences between DCT coefficients, after inverse quantization, of the said adjacent macro-blocks, and compares the said information of sum of absolute differences with a first predefined threshold.

2. Transcoding method according to Claim 1, **characterized in that**, when the fused macro-blocks correspond to data predicted in *intra* mode, the transcoding device associates with the resulting macro-block a prediction direction which is the prediction direction closest according to the H.264 format to a linear combination of the prediction directions associated with the fused macro-blocks.

3. Transcoding method according to either one of Claims 1 and 2, **characterized in that**, to fuse four adjacent macro-blocks (501, 502, 503, 504) to form a resulting square macro-block (509), the transcoding device implements:

- a first butterfly diagram according to the vertical dimension of the macro-blocks thus making it possible to generate two first intermediate macro-blocks (505, 506) on the basis of two macro-blocks (501, 502) from among the four adjacent macro-blocks;
- a second butterfly diagram according to the vertical dimension of the macro-blocks thus making it possible to generate two second intermediate macro-blocks (507, 508) on the basis of two other macro-blocks (503, 504) from among the four adjacent macro-blocks; and
- a third butterfly diagram according to the horizontal dimension of the macro-blocks thus making it possible to generate the resulting square macro-block.

4. Transcoding method according to any one of Claims 1 to 3, **characterized in that**, for macro-blocks encoded in *inter* mode to be fused, the transcoding device determines (405) a disparity between motion vectors associated with the said macro-blocks, and does or does not authorize the fusion of the said macro-blocks as a function of a similarity criterion of said motion vectors.

5. Transcoding method according to Claim 4, **characterized in that**, to determine whether motion vectors are similar, the transcoding device determines the norm of the difference of the components of the said motion vectors and compares the said norm with a second predefined threshold.

6. Transcoding method according to any one of Claims 1 to 5, **characterized in that** the transcoding device determines each motion vector MV in the H.265 format resulting from a fusion of macro-blocks encoded in *inter* mode by the following relation:

$$MV = \frac{(\alpha1.MV1 + \alpha2.MV2 + .. \alpha n.MVn)}{(\alpha1 + \alpha2 ... + \alpha n)}$$

where:

- n designates the quantity of fused macro-blocks;
- MV1,..., MVn represents the n motion vectors of the macro-blocks encoded in *inter* mode which have been fused together; and
- $\alpha1$,..., $\alpha n$ are weighting coefficients.

7. Transcoding method according to any one of Claims 1 to 6, **characterized in that** the transcoding device fuses several sequences of successive images according to the H.264 format into a single sequence of images, when in the said sequences of successive images, the energies of the predicted images are below a third predefined threshold.

8. Device (100; 200; 500) for transcoding a stream (110) of video data in the H.264 format into a stream (120; 220) of video data in the H.265 format, the said transcoding device operating in the frequency domain without passing to the pixel domain and comprising:

- means (101; 201) for performing a fusion of adjacent macro-blocks of the data stream in the H.264 format according to a predetermined criterion of frequency similarity of the discrete cosine transform DCT coefficients of the said macro-blocks after application of an inverse quantization operation; and
- means (102; 202) for determining motion vectors in the H.265 format on the basis of motion vectors in the H.264 format by performing, for the macro-blocks resulting from the fusion of macro-blocks arising from the data stream in the H.264 format, a combination of the motion vectors of the said macro-blocks arising from the data stream in the H.264 format; **characterized in that**:
to determine whether adjacent macro-blocks can be fused, the transcoding device comprises means for obtaining an information of sum of absolute differences between DCT coefficients, after inverse quantization, of the said adjacent macro-blocks, and comparison means for comparing the said information of sum of the absolute differences with a first predefined threshold.

9. Computer program, **characterized in that** it comprises instructions for implementing, by a device, the method according to any one of Claims 1 to 7 when the said program is executed by a processor of the said device.

10. Storage means, **characterized in that** they store a computer program comprising instructions for implementing, by a device, the method according to any one of Claims 1 to 7 when the said program is executed by a processor of the said device.

EP 3 095 240 B1

Fig. 1

Fig. 2

14

300

| 301<br>CPU | 302<br>RAM | 303<br>ROM |

| 304 | 305 |

310

Fig. 3

Réception d'un flux de données au format H.264 — 401

Fusion de macro-blocs — 402

Génération d'un *quadtree* — 403

Obtention de vecteurs de mouvement au format H.264 — 404

**oui** Ecart? — 405

**non**

Détermination des vecteurs de mouvement pour les macro-blocs fusionnés et mise à l'échelle — 406

Génération d'un flux de données au format H.265 — 407

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DONG ZHANG et al.** Fast transcoding from H.264/AVC to High Efficiency Video Codyng. *IEEE International Conference on Multimedia and Expo,* 2012, 651-656